# EUROPEAN PATENT APPLICATION

(11) **EP 3 525 159 A1**
(43) Date of publication of application: **14.08.2019**
(21) Application number: 17858253.2
(22) Date of filing: 26.09.2017
(51) Int. Cl.: G06Q 50/04, G05B 19/418

(54) **PRODUCT MANUFACTURING MANAGEMENT SYSTEM**

(30) Priority: 07.10.2016 JP 2016199079
(71) Applicant: Daikin Industries, Ltd., Osaka 530-8323 (JP)
(72) Inventor: IIDA, Makoto, Osaka-shi Osaka 530-8323 (JP); MURAKAMI, Takeshi, Osaka-shi Osaka 530-8323 (JP); MIYASHITA, Shinji, Osaka-shi Osaka 530-8323 (JP)
(74) Representative: Global IP Europe Patentanwaltskanzlei
(86) International application number: PCT/JP2017/034784
(87) International publication number: WO 2018/066415

(57) **Abstract**

The present invention is intended to provide a product production management system that enables users to quickly and smoothly reach information suitable for the positions of the users. In a product production management system (100), whether the user is a first system user or a second system user is authenticated on the basis of ID information registered in advance. Assuming, for example, that the first system user is set to a senior manager, when an authentication unit (55) determines, on the basis of the ID information, whether the user is the "first system user" and if so, a first screen (530A) is displayed in a manner of guiding the senior manager to more preferentially designate a predetermined option in comparison with other options. Hence the senior manager can quickly and smoothly reach the necessary information without needing any complicated operation.

## Description

### TECHNICAL FIELD

The present invention relates to a product production management system of acquiring production result data for products and presenting progress information to users.

### BACKGROUND ART

With global expansion of companies, products are produced in overseas factories, and various management systems capable of presenting production situations in the factories in real time are widely used.

For instance, Patent Literature 1 (Japanese Patent No. 5986531) discloses a production management system for, when there is a difference between a schedule and an actual result, easily specifying the cause of the difference. Many systems including the disclosed production management system aim to support work of staffs engaged in the production by visualizing progress information in production steps.

From the viewpoint of visualization, for example, Patent Literature 2 (Japanese Laid-Open Patent Application Publication No. H02-95551) discloses a "work volume display method" that places emphasis on easy viewing of a graph displaying the situation of the manufacturing site. Patent Literature 3 (Japanese Patent No. 4466776) discloses an apparatus management device changing the color of an icon such that a user can perceive the fact of an occurring abnormality just by viewing the icon.

### SUMMARY OF THE INVENTION

### <Technical Problem>

Users of the above-described management system are diverse and include staffs at the worksite, a factory chief who supervises the factory, a management team, etc. Therefore, while sharing the same information on the system, the approach to confronting the events is different and the information users want is also different depending on the users. In the case, for example, that the problem of a delay in production progress exceeds the ability of the field staff to solve, a senior manager needs to analyze the cause from a different perspective and to give appropriate instructions to the staff. For that reason, there is a demand for a system capable of quickly acquiring information suitable for the position of the user of the production management system.

An object of the present invention is to provide a product production management system that enables users to quickly and smoothly reach information suitable for the positions of the users.

### <Solution to Problem>

A product production management system according to a first aspect of the present invention is a product production management system of acquiring production result data for products and presenting progress information to users, the product production management system including display means. The display means displays a progress list screen that lists progresses in a plurality of product production lines in a factory. When a first system user selects one of the product production lines for which occurrence of an abnormality or a delay is informed, the display means transits the progress list screen to a first screen. When a second system user selects one of the product production lines for which occurrence of an abnormality or a delay is informed, the display means transits the progress list screen to a second screen different from the first screen. The first screen displays predetermined one among a plurality of options, which are necessary to check situations of the selected product production line, in a manner of guiding the first system user to more preferentially designate the predetermined option in comparison with the other options. The second screen displays a plurality of options that are necessary to check situations of the selected product production line.

With the above product production management system, when a progress delay is generated in one line in the production field, a staff for the relevant line can select one among the plurality of options displayed on the second screen in the product production management system based on judgment resorting to his or her own experiences, the one being adapted to specify necessary information.

On the other hand, a senior manager needs information with which the senior manager can entirely watch over the production situations in the relevant line in a time series for the purpose of judging, for example, whether the cause of the progress delay in the one line is a problem that cannot be overcome with on-site actions alone, i.e., a problem that requires a higher-rank person's decision.

With the above product production management system, once the first system user is set to the senior manager, the first screen is displayed in the manner of guiding the senior manager to more preferentially designate the predetermined option in comparison with the other options. Therefore, the senior manager can quickly and smoothly reach the necessary information without needing any complicated operation.

A product production management system according to a second aspect of the present invention is the product production management system according to the first aspect of the present invention, which further includes authentication means authenticating, on the basis of ID information registered for each of the users, whether the user is the first system user or the second system user.

With the above product production management system, whether the user is the first system user or the second system user is determined through authentication based on the ID information. Assuming, for example, that the first system user is set to the senior manager, similar operation and advantageous effects to those resulting from the first aspect can be obtained when the authentication means determines, on the basis of the ID information, whether the user is the "first system user" or not and a determination result shows that the user is the "first system user". Thus, since the first screen is displayed in the manner of guiding the senior manager to more preferentially designate the predetermined option in comparison with the other options, the senior manager can quickly and smoothly reach the necessary information without needing any complicated operation.

A product production management system according to a third aspect of the present invention is the product production management system according to the first or second aspect of the present invention, wherein the progress information is updated in real time. Detailed information for one of the product production lines in which a progress delay is occurring is updated per predetermined time. An update time is displayed on a screen on which each of the progress information and the detailed information is displayed.

With the above product production management system, since the user can recognize the progress information in real time, and also determine freshness of the detailed information from the update time, the system is conveniently usable by the user.

A product production management system according to a fourth aspect of the present invention is the product production management system according to the first aspect of the present invention, wherein the display means displays a screen displaying a plurality of higher-level factory locations to specify the factory for which the progress list screen is to be displayed.

With the above product production management system, since the manager supervising a plurality of factories at different locations can specify one factory and view the progress list screen for the specified factory, the system is convenient in use.

### <Advantageous Effects of Invention>

With the product production management system according to the first aspect of the present invention, when the progress delay is generated in one line in the production field, the staff for the relevant line can select one among the plurality of options displayed on the second screen in the product production management system based on judgment resorting to his or her own experiences, the one being adapted to specify the necessary information.

In addition, once the first system user is set to the senior manager, the first screen is displayed in the manner of guiding the senior manager to more preferentially designate the predetermined option in comparison with the other options. Therefore, the senior manager can quickly and smoothly reach the necessary information without needing any complicated operation.

With the product production management system according to the second aspect of the present invention, whether the user is the first system user or the second system user is determined through authentication based on the ID information. Assuming, for example, that the first system user is set to the senior manager, when the authentication means determines, on the basis of the ID information, whether the user is the "first system user" or not and a determination result shows that the user is the "first system user", the first screen is displayed in the manner of guiding the senior manager to more preferentially designate the predetermined option in comparison with the other options. Therefore, the senior manager can quickly and smoothly reach the necessary information without needing any complicated operation.

With the product production management system according to the third aspect of the present invention, since the user can recognize the progress information in real time, and also determine freshness of the detailed information from the update time, the system is conveniently used by the user.

With the product production management system according to the fourth aspect of the present invention, since the manager supervising a plurality of factories at different locations can specify one factory and view the progress list screen for the factory, the system is convenient in use.

### BRIEF DESCRIPTION OF THE DRAWINGS

Fig. 1 is a block diagram of a product production management system according to an embodiment of the present invention.
Fig. 2A is a flowchart of a self-sustaining operation of the product production management system.
Fig. 2B is a flowchart of a service presenting operation of the product production management system.
Fig. 2C is a flowchart of the service presenting operation of the product production management system.
Fig. 3 illustrates an example of a global display screen.
Fig. 4 illustrates an example of a factory map display screen.
Fig. 5 illustrates an example of a progress list screen.
Fig. 6 illustrates a menu screen as an example of a first screen.
Fig. 7 illustrates a menu screen as an example of a second screen.
Fig. 8 illustrates a "PDS Time Chart" screen.
Fig. 9 illustrates an example of an "Operation Inspection and Trend Monitoring" display screen.

### DESCRIPTION OF EMBODIMENTS

An embodiment of the present invention is described below with reference to the drawings. The following embodiment is a specific example of the present invention, and is not purported to restrict the technical scope of the present invention.

### (1) Outline

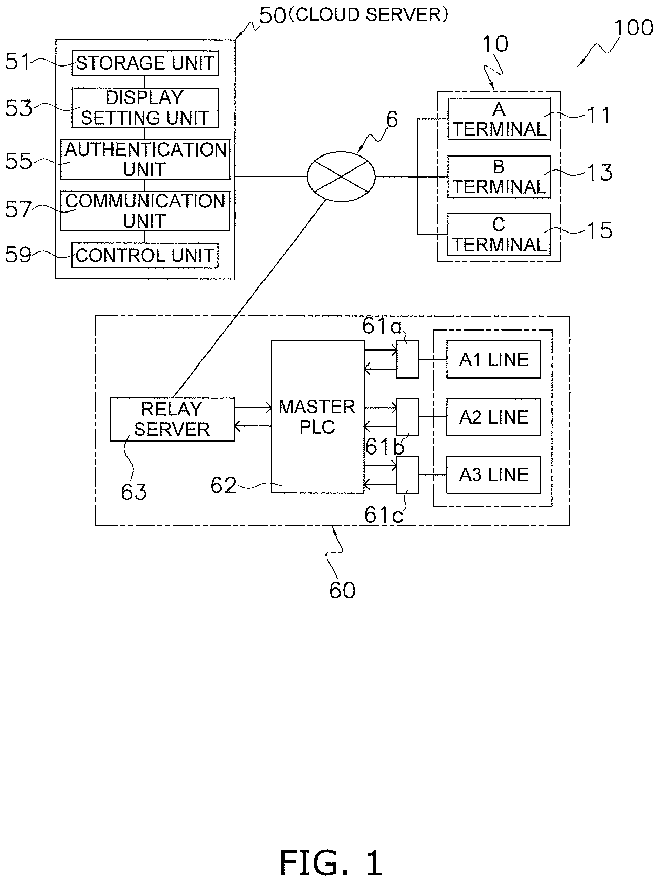

Fig. 1 is a block diagram of a product production management system 100 according to the embodiment of the present invention. Referring to Fig. 1, in the product production management system 100, a cloud server 50 is connected via a communication network 6 to a relay server 63 in a factory 60 and a terminal 10.

The communication network 6 is constituted by a communication line utilizing the information communication technique, such as the Internet, an intranet, a LAN (Local Area Network), or a VPN (Virtual Private Network), to perform communication with the relay server 63 in the factory 60.

The cloud server 50 stores production result information for A1, A2, and A3 lines in the factory 60, which is transmitted from the relay server 63, and executes data processing in response to a demand from a user.

The relay server 63 collects the production result information for each of the lines in the factory 60, and controls transmission timing of the production result information.

### (2) Detailed Configuration

The relay server 63 and the cloud server 50 are described below.

### (2-1) Relay Server 63

The relay server 63 collects production result data for each of the A1 to A3 lines via a master PLC 62.

Programmable controllers (hereinafter referred to as "PLC") are installed in the factory 60 for each of the A1 to A3 lines, and control various facilities arranged along the lines. For convenience of explanation, a group of PLCs controlling various facilities along the A1 line is called a PLC group 61a. Similarly, a PLC group 61b corresponds to the A2 line, and a PLC group 61c corresponds to the A3 line.

The master PLC 62 aggregates, as line information, data from the PCL groups 61a, 61b, and 61c controlling the facilities along the A1 to A3 lines, respectively.

### (2-2) Cloud Server 50

The cloud server 50 includes a storage unit 51, a display setting unit 53, an authentication unit 55, a communication unit 57, and a control unit 59.

### (2-2-1) Storage Unit 51

The storage unit 51 stores data transferred between units in the cloud server 50, and the production result information communicated between the cloud server 50 and the relay server 63.

### (2-2-2) Display Setting Unit 53

The display setting unit 53 changes the display format of a display screen displayed on a display at the terminal 10, and performs screen transition.

### (2-2-3) Authentication Unit 55

The authentication unit 55 authenticates a user who is going to log into the product production management system 100 from the terminal 10, on the basis of ID information of the user.

### (2-2-4) Communication Unit 57

The communication unit 57 is used for communicating information between the units in the cloud server 50, and between the cloud server 50 and the relay server 63 in the factory 60.

### (2-2-5) Control Unit 59

The control unit 59 controls the communication unit 57 to receive the production result information transmitted from the relay server 63, and controls operations of the other units in the cloud server 50 to execute data processing of various data, which is contained in the production result information, in accordance with programs set in advance.

### (3) Operations

The product production management system executes a self-sustaining operation that is executed regardless of whether an access is received from the user, and a service presenting operation that is executed in response to a demand of the user who has accessed via the terminal, etc. The following is description of those operations.

### (3-1) Self-sustaining Operation of Product Production Management System 100

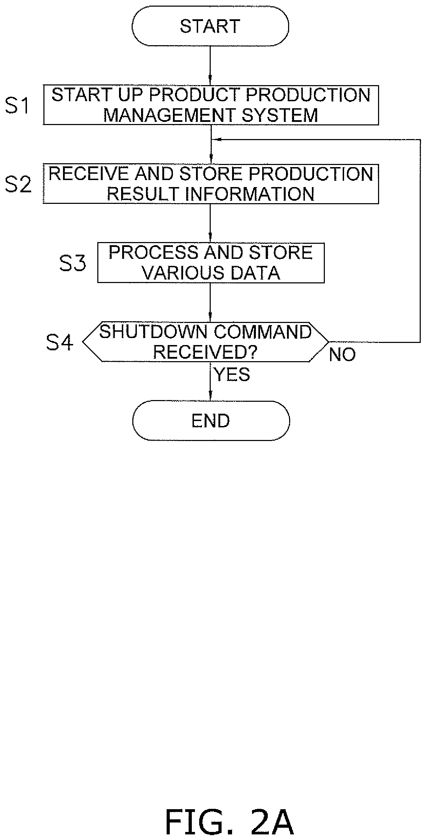

Fig. 2A is a flowchart of the self-sustaining operation of the product production management system 100. The self-sustaining operation is described below with reference to Fig. 2A.

### (Step S1)

In step S1, the control unit 59 of the cloud server 50 starts up the product production management system 100. Once started up, the system does not stop except in special circumstances such as maintenance.

### (Step S2)

In step S2, the control unit 59 receives, through the communication unit 57, the production result information transmitted from the relay server 63 in the factory 60, and stores the production result information in a predetermined first area (not illustrated) of the storage unit 51.

### (Step S3)

In step S3, the control unit 59 processes, in cooperation with the display setting unit 53, various data contained in the production result information, which has been stored in the storage unit 51, such that the production result information can be displayed in the preset formant per data type, and stores the processed data in a predetermined second area (not illustrated) of the storage unit 51.

### (Step S4)

The control unit 59 determines whether a shutdown command is received. If the shutdown command is received, the control unit 59 shuts down the system and brings the operation to the end. If the shutdown command is not received, the control unit 59 returns to step S2.

### (3-2) Service Presenting Operation of Product Production Management System 100

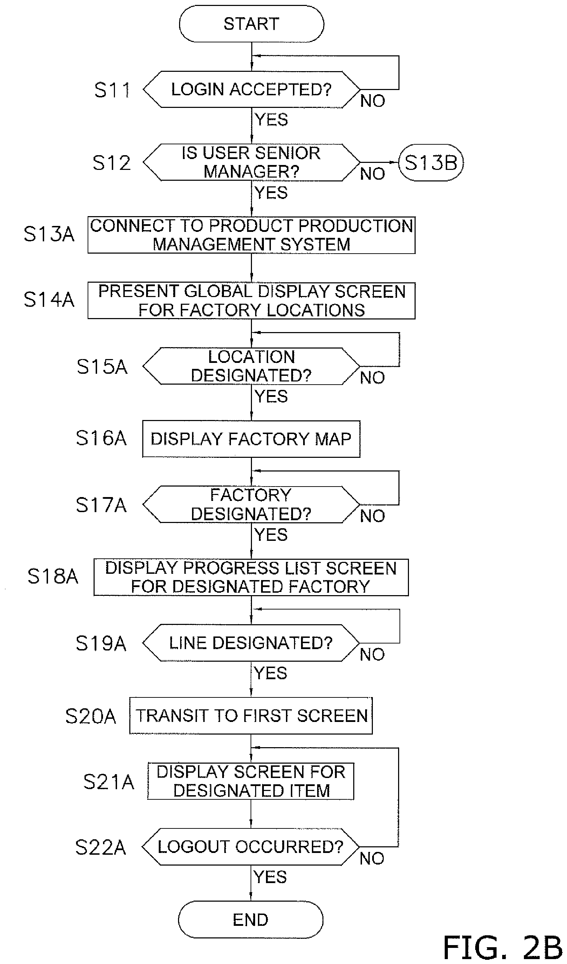

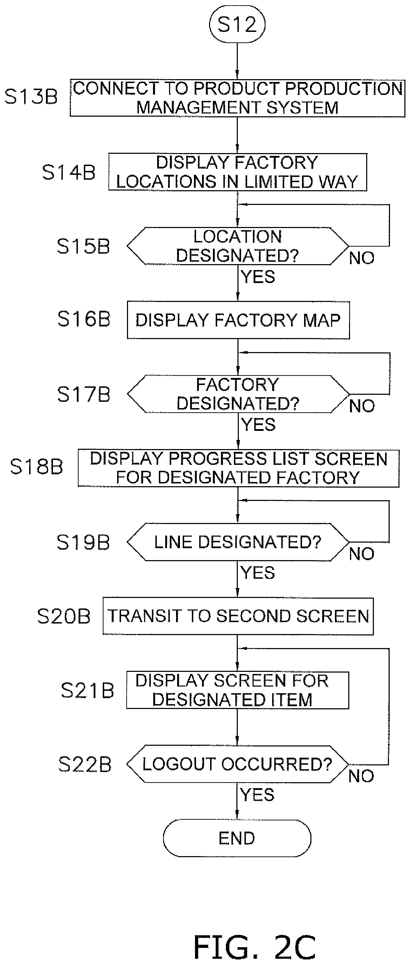

Figs. 2B and 2C are flowcharts of the service presenting operation of the product production management system 100. The service presenting operation is described below with reference to Figs. 2B and 2C.

### (Step S11)

In step S11, the control unit 59 of the cloud server 50 determines, in cooperation with the authentication unit 55, whether a login is accepted. The authentication unit 55 authenticates the user by comparing ID information, which is input at the time of the login, with ID information registered in advance. For example, an ID in combination of symbols and/or numerals, or biological information is registered as the ID information.

If it is determined that the login is accepted, the control unit 59 goes to step S12. Otherwise, the control unit 59 returns to step S11.

### (Step S12)

In step S12, the control unit 59 determines, on the basis of the ID information input at the time of the preceding login (step S11), whether the user is a senior manager (hereinafter referred to as a "first system user"), for example, a factory chief, or a line staff (hereinafter referred to as a "second system user"). If it is determined that the user is the "first system user", the control unit 59 goes to step S13A. If it is determined that the user is the "second system user", the control unit 59 goes to step S13B.

### (3-2-1) Login by "First System User"

### (Step S13A)

In step S13A, the control unit 59 connects a terminal, which has logged in, to the product production management system 100 in cooperation with the communication unit 57.

### (Step S14A)

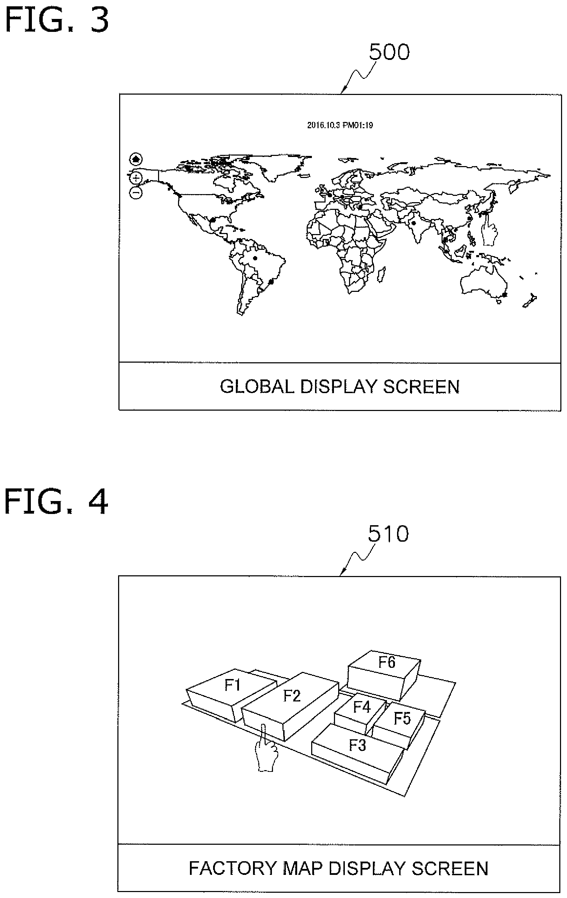

In step S14A, the control unit 59 displays, in cooperation with the display setting unit 53, a global display screen 500 on a display at the logged-in terminal. Fig. 3 illustrates an example of the global display screen 500. In Fig. 3, a world map is drawn on the screen, and locations of overseas factories are denoted by marks.

### (Step S15A)

In step S15A, the control unit 59 determines whether the location is designated on the global display screen 500. For example, the user having logged in from an A terminal 11 designates the location by moving a cursor (finger-shaped cursor in Fig. 3) on the global display screen 500 that is displayed on the display at the A terminal 11. For the sake of convenience, the following description is made on the assumption that operations are performed on the display at the A terminal 11.

### (Step S16A)

In step S16A, the control unit 59 displays, in cooperation with the display setting unit 53, a factory map display screen 510 on the display at the logged-in terminal. Fig. 4 illustrates an example of the factory map display screen 510. In Fig. 4, a factory map for the designated location is drawn on the screen, and the user can designate a factory.

### (Step S17A)

In step S17A, the control unit 59 determines whether the factory is designated on the factory map display screen 510. For example, the user designates the factory by moving the cursor (finger-shaped cursor in Fig. 4) on the factory map display screen 510 that is displayed on the display at the A terminal 11.

### (Step S18A)

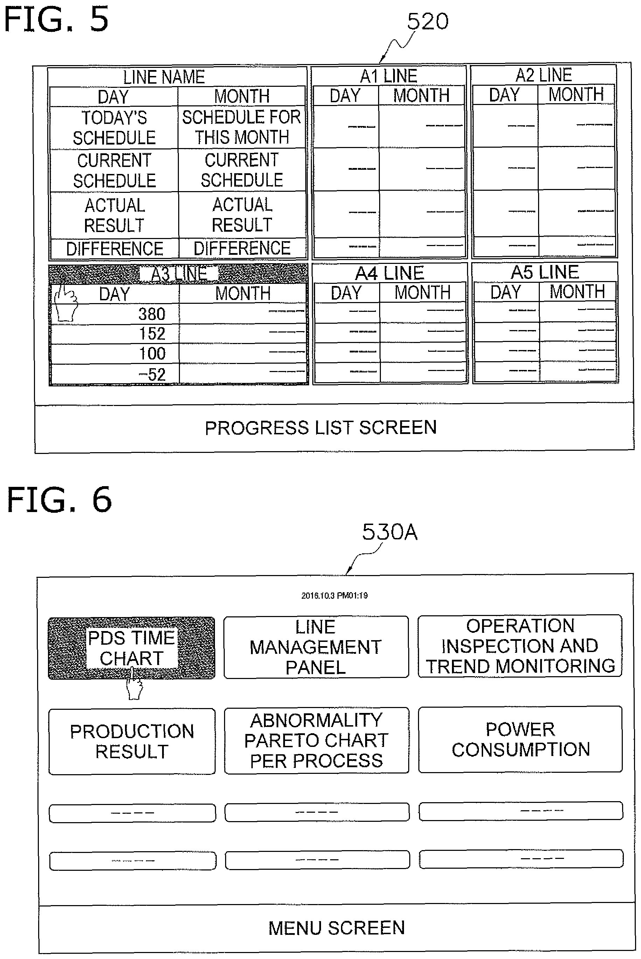

In step S18A, the control unit 59 displays, on the display, a progress list screen 520 for the factory, which has been designated in the preceding step S17A. Fig. 5 illustrates an example of the progress list screen 520. In Fig. 5, for each of all lines in the designated factory, "Today's Schedule", "Current Schedule", "Actual Result", and "Difference" are indicated in the left column of the progress list screen 520, and "Schedule for This Month", "Current Schedule", "Actual Result", and "Difference" are indicated in the right column.

The "Current Schedule" indicates a value obtained by dividing a value in "Today's Schedule (or Schedule for This Month)" by a predetermined number of hours (or a predetermined number of days), and by successively accumulating a value that is to be achieved per unit time (or unit day). Assuming, for example, "Today's Schedule" representing the production volume of products to be 800, an operating time to be 8 hours, and the unit time to be 1 hour, "100" is displayed in "Current Schedule" during a period until one hour lapses from the start of the production, and "200" is displayed during a period until another one hour lapses after the lapse of the first one hour. The "Difference" represents a difference between "Current Schedule" and "Actual Result".

In Fig. 5, when a progress delay is occurring as in the A3 line, the relevant column is highlighted by coloring (such as displaying the column in red) or blinking, for example.

### (Step S19A)

In step S19A, the control unit 59 determines whether the line is designated on the progress list screen 520. The user designates, for example, the A3 line by moving the cursor (finger-shaped cursor in Fig. 5) on the progress list screen 520 that is displayed on the display at the A terminal 11.

### (Step S20A)

In step S20A, the control unit 59 displays, to the first system user, a first screen 530A on the display.

Fig. 6 illustrates a menu screen as an example of the first screen 530A. In Fig. 6, menu items, such as "PDS Time Chart", "Line Management Panel", "Operation Inspection and Trend Monitoring", "Production Result", "Abnormality Pareto Chart per Process", and "Power Consumption", are arrayed on the first screen 530A.

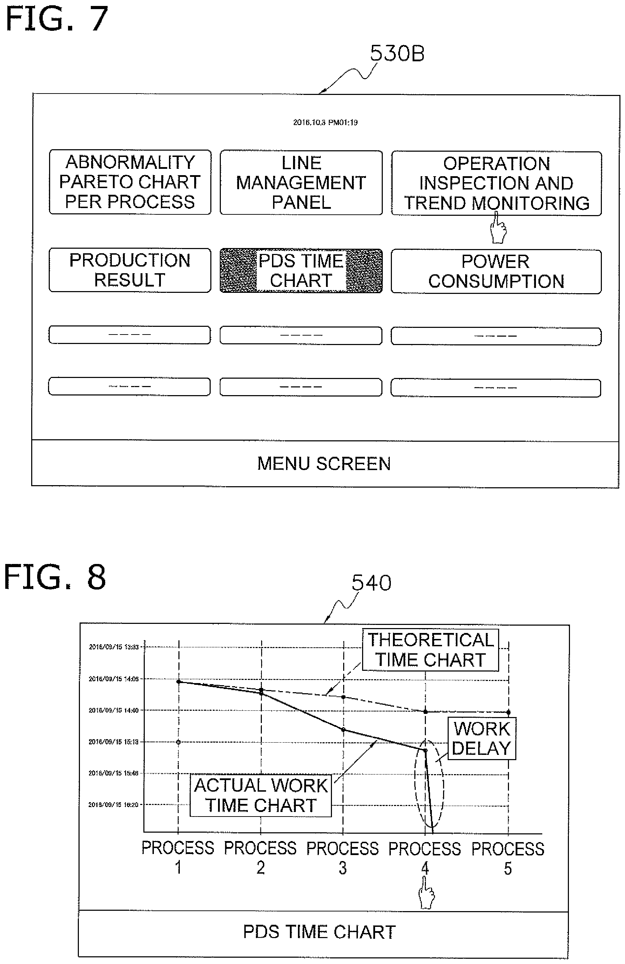

In addition to the first screen 530A, a second screen 530B mainly utilized by the line staff is also prepared as the menu screen. Fig. 7 illustrates a menu screen as an example of the second screen 530B. The first screen 530A and the second screen 530B are different in that the item of "PDS Time Chart" is positioned at the upper left side in the first screen 530A, and that the relevant item is highlighted by coloring or blinking, for example.

Usually, it seems to be sufficient to display, as the menu screen, only the second screen 530B that is utilized by the line staff. However, when the user is the "first system user" who is a high-rank person like a senior manager (e.g., a factory chief), the user is less familiar to select the information of interest from among a variety of menu items than the staff engaged in the actual line. Furthermore, between the senior manager and the staff engaged in the actual line, there is necessarily a difference in actions capable of being taken when confronted with the trouble of a progress delay caused by an abnormality.

From the above-described point of view, the predetermined item is positioned at an upper level in the menu and is highlighted by coloring or blinking, for example, such that the senior manager can naturally select the relevant item without hesitation and can quickly and smoothly reach the information of interest.

Highlighting manners for attracting a gaze of the senior manager may be, for example, a manner of displaying only the predetermined item and not displaying the other items, a manner of displaying only the predetermined item with a larger select (touch) button than those for the other items, a manner of displaying only letters denoting the predetermined item in larger size than letters denoting the other items, or a manner of displaying only the predetermined item at a position on the screen, which is "visually recognized with more ease", or at which "a cursor resides more frequently in a standby mode". Appropriate one of those manners can be used optionally.

In the illustrated example, "PDS Time Chart" is positioned at the upper level in the menu screen and is highlighted by coloring. Such display is based on the prediction that the senior manager watches over an actual work time chart for the line with intent to estimate the event, which may occur in future due to the progress delay, rather than a specific cause for the delay, such as a facility abnormality.

### (Step S21A)

In step S21A, the control unit 59 displays a screen representing "PDS Time Chart" that has been designated on the above-described first screen 530A.

Fig. 8 illustrates a "PDS Time Chart" screen 540. In the time chart of Fig. 8, the horizontal axis of the screen 540 denotes processes, and the vertical axis denotes hour and minute. A polygonal line denoted by a two-dot-chain line represents a theoretical time chart when no progress delay occurs. A polygonal line denoted by a solid line represents an actual work time chart when the progress delay has occurred.

In the time charts, the horizontal axis may denote hour and minute, and the vertical axis may denote processes. However, the chart in which the horizontal axis denotes processes and the vertical axis denotes hour and minute as in this embodiment is advantageous in making the chart more convenient to the user because the user can view the work progress while vertically scrolling hour and minute.

When the fist system user pays attention to "Process 4" as a process of interest, for example, the user can cause a screen representing details of matters, current situations, etc., which are necessary to specify the cause of the abnormality having invited the work delay in "Process 4", to be displayed by selecting "Process 4" on the horizontal axis with the cursor (finger-shaped cursor in Fig. 8), or by designating the line for "Process 4" in the actual work time chart.

The progress information is displayed in cycle time of the product production, i.e., in real time, and detailed information of each process, etc. are updated per predetermined unit time. The update time is displayed on the screen.

### (Step S22A)

In step S22A, the control unit 59 determines whether a logout has occurred. If a logout has occurred, the control unit 59 cuts the connection between the A terminal 11 and the product production management system 100. If a logout has not occurred, the control unit 59 continues the display of the designated screen.

### (3-2-2) Login by "Second System User"

### (Step S13B)

In step S13B, the control unit 59 connects a terminal, which has logged in, to the product production management system 100 in cooperation with the communication unit 57. The fact that the user is the "second system user" has been authenticated in the above-described step S12.

### (Step S14B)

In step S14B, the control unit 59 displays, in cooperation with the display setting unit 53, a global display screen on a display at the logged-in terminal. The global display screen displayed here is basically the same as the global display screen 500 illustrated in Fig. 3. The difference is that, for example, when the user is present in Japan, only Japan is denoted by a mark ● because the location to which the user belongs is known at the time of the login.

### (Step S15B)

In step S15B, the control unit 59 determines whether the location (Japan) is designated on the global display screen 500. For example, the user having logged in from the A terminal 11 designates the location (Japan) by moving a cursor (finger-shaped cursor in Fig. 3) on the global display screen 500 that is displayed on the display at the A terminal 11. For the sake of convenience, the following description is made on the assumption that operations are performed on the display at the A terminal 11.

### (Step S16B)

In step S16B, the control unit 59 displays, in cooperation with the display setting unit 53, a factory map display screen 510 on the display at the logged-in terminal. A factory map for the designated location is drawn on the factory map display screen 510, and the user can designate a factory.

### (Step S17B)

In step S17B, the control unit 59 determines whether the factory is designated on the factory map display screen 510. For example, the user designates the factory by moving the cursor (finger-shaped cursor in Fig. 4) on the factory map display screen 510 that is displayed on the display at the A terminal 11.

### (Step S18B)

In step S18B, the control unit 59 displays a progress list screen 520 for the factory, which has been designated in the preceding step S17B, on the display. Details of the displayed items are the same as those displayed in step S18A.

### (Step S19B)

In step S19B, the control unit 59 determines whether the line is designated on the progress list screen 520. Here, the user designates the A3 line by moving the cursor (finger-shaped cursor in Fig. 5) on the progress list screen 520 that is displayed on the display at the A terminal 11.

### (Step S20B)

In step S20B, the control unit 59 displays the second screen 530B (see Fig. 7) on the display to the "second system user". In Fig. 7, menu items, such as "Abnormality Pareto Chart per Process", "Line Management Panel", "Operation Inspection and Trend Monitoring", "Production Result", "PDS Time Chart", and "Power Consumption" are arrayed on the second screen 530B.

In the second screen 530B, positioning of the predetermined item to the upper level in the menu and highlighting by coloring or blinking, for example, are not performed unlike the first screen 530A that is displayed to the first system user. This is because the second system user is more familiar to the line situations than the first system user and is able to more easily specify the cause of the progress delay. For instance, the second system user estimates that a facility abnormality is the cause, and judges that the item "Operation Inspection and Trend Monitoring" is to be checked.

In such a case, when the second system user designates the menu item of interest, i.e., "Operation Inspection and Trend Monitoring" here, by using the cursor (finger-shaped cursor in Fig. 7), a screen denoting details of the item "Operation Inspection and Trend Monitoring" is displayed.

### (Step S21B)

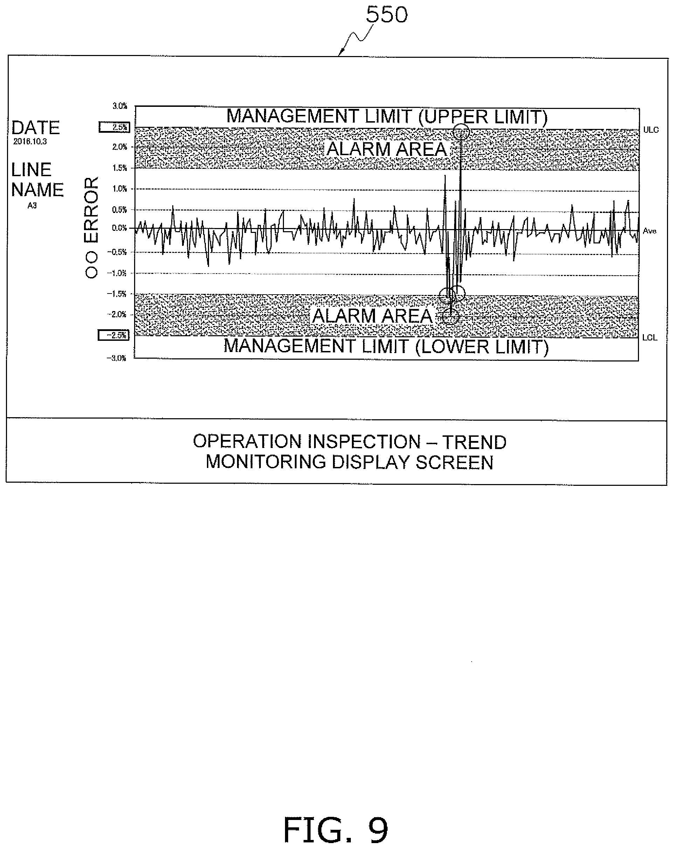

In step S21B, the control unit 59 displays a screen of the menu item that has been designated on the above-described second screen 530B. Fig. 9 illustrates an example of an "Operation Inspection and Trend Monitoring" display screen 550. By checking the result of "Operation Inspection and Trend Monitoring" for a plurality of facilities in Fig. 9, the user can find a point at which a "○○ error" varies significantly. Finding that point assists the user in specifying the cause of the facility abnormality.

### (Step S22B)

In step S22B, the control unit 59 determines whether a logout has occurred. If a logout has occurred, the control unit 59 cuts the connection between the A terminal 11 and the product production management system 100. If a logout has not occurred, the control unit 59 continues the display of the designated screen.

### (4) Features

### (4-1)

According to the product production management system 100, when the progress delay is generated in one line in the production field, the second system user (staff for the relevant line) can select one among options displayed on the second screen 530B in the product production management system 100 based on judgment resorting to his or her own experiences, the one being adapted to specify necessary information.

On the other hand, the first system user (senior manager) needs information with which the user can entirely watch over the production situations in the relevant line in a time series for the purpose of judging, for example, whether the cause of the progress delay in the one line is a problem that cannot be overcome with on-site actions alone, i.e., a problem that requires a higher-rank person's decision.

According to the product production management system 100, since the first screen 530A is displayed in a manner of guiding the senior manager to more preferentially designate the predetermined option in comparison with the other options, the senior manager can quickly and smoothly reach the necessary information without needing any complicated operation.

### (4-2)

According to the product production management system 100, whether the user is the first system user or the second system user is determined through authentication based on the ID information registered in advance. Assuming, for example, that the first system user is set to the senior manager, when the authentication unit 55 determines, on the basis of the ID information, whether the user is the "first system user" or not and a determination result shows that the user is the "first system user", the first screen 530A is displayed in a manner of guiding the senior manager to more preferentially designate the predetermined option in comparison with the other options. Therefore, the senior manager can quickly and smoothly reach the necessary information without needing any complicated operation.

### (4-3)

According to the product production management system 100, since the user can recognize the progress information in real time, and also determine freshness of the detailed information from the update time displayed on the screen, the system is conveniently used by the user.

### (4-4)

According to the product production management system 100, since the manager supervising a plurality of factories at different locations can specify one factory on the global display screen 500 and view the progress list screen 520 for the factory, the system is convenient in use.

### REFERENCE SIGNS LIST

- 11: A terminal (display means)
- 13: B terminal (display means)
- 15: C terminal (display means)
- 53: display setting unit (display means)
- 55: authentication unit (authentication means)
- 100: product production management system
- 500: global display screen (screen displaying plurality of factory locations)
- 520: progress list screen
- 530A: first screen
- 530B: second screen

### CITATION LIST

### PATENT LITERATURE

[PTL 1] Japanese Patent No. 5986531
[PTL2] Japanese Laid-Open Patent Application Publication No. H02-95551
[PTL 3] Japanese Patent No. 4466776

## Claims

1. A product production management system (100) of acquiring production result data for products and presenting progress information to users, the product production management system comprising:
display means (11, 13, 15, 53) displaying a progress list screen (520) that lists progresses in a plurality of product production lines in a factory, wherein
when a first system user selects one of the product production lines for which occurrence of an abnormality or a delay is informed, the display means transits the progress list screen to a first screen (530A) displaying predetermined one among a plurality of options, which are necessary to check situations of the selected product production line, in a manner of guiding the first system user to more preferentially designate the predetermined option in comparison with other options, and
when a second system user selects one of the product production lines for which occurrence of an abnormality or a delay is informed, the display means transits the progress list screen to a second screen (530B) displaying a plurality of options that are necessary to check situations of the selected product production line, the second screen being different from the first screen.

2. The product production management system (100) according to claim 1, further comprising authentication means (55) authenticating, based on ID information registered for each of the users, whether the user is the first system user or the second system user.

3. The product production management system (100) according to claim 1 or 2, wherein
the progress information is updated in real time,
detailed information for one of the product production lines in which a progress delay is occurring is updated per predetermined time, and
an update time is displayed on a screen on which each of the progress information and the detailed information is displayed.

4. The product production management system (100) according to claim 1, wherein
the display means displays a screen (500) displaying a plurality of higher-level factory locations to specify the factory for which the progress list screen is to be displayed.
